# EUROPÄISCHE PATENTSCHRIFT

(11) **EP 1 512 201 B1**
(45) Veröffentlichungstag und Bekanntmachung des Hinweises auf die Patenterteilung: **16.11.2005**
(21) Anmeldenummer: 04709158.2
(22) Anmeldetag: 08.02.2004
(51) Int. Cl.: H01R 39/54, H02K 11/02, H02K 13/10, H01R 39/04

(54) **KOMMUTATOR FÜR EINE ELEKTRISCHE MASCHINE**
COMMUTATOR FOR AN ELECTRIC MACHINE
COLLECTEUR POUR MACHINE ELECTRIQUE

(30) Priorität: 14.02.2003 DE 10306516
(43) Veröffentlichungstag der Anmeldung: 09.03.2005
(73) Patentinhaber: Kolektor Group D.O.O., 5280 Idrija (SI)
(72) Erfinder: POTOCNIK, Joze, SI-5280 Idrija (SI); KUMAR, Ludvik, 5281 Spodnja Idrija (SI)
(74) Vertreter: Grättinger & Partner (GbR)
(86) Internationale Anmeldenummer: PCT/EP2004/001145
(87) Internationale Veröffentlichungsnummer: WO 2004/073120

(56) Entgegenhaltungen:
- EP-A- 0 364 292
- DE-A- 4 338 345
- US-A- 5 717 270
- US-B1- 6 285 106

## Beschreibung

Die vorliegende Erfindung betrifft einen Kommutator für eine elektrische Maschine, umfassend einen aus isolierender Preßmasse gefertigten Trägerkörper, eine Mehrzahl von an diesem gleichmäßig um die Kommutatorachse herum angeordneten metallischen Leitersegmenten mit daran angeordneten Anschlußelementen für eine Rotorwicklung und eine Entstöreinrichtung, mit welcher die Leitersegmente elektrisch leitend verbunden sind und die eine der Anzahl der Leitersegmente entsprechende Anzahl einzelner Enstörelemente umfaßt, wobei die Leitersegmente Kontaktzungen aufweisen, die jeweils entfernt von ihren Fußpunkten an zugeordneten Kontaktpunkten mit den angrenzenden Kontaktpolen zweier benachbarter Entstörelemente verbunden sind.

Kommutatoren verschiedener Bauweisen (Trommelkommutatoren, Plankommutatoren) sind in vielfältigen Ausgestaltungen bekannt. Zunehmend werden Kommutatoren, insbesondere im Falle ihrer Ausführung als Trommelkommutator, dabei mit Einrichtungen zur Funkenunterdrückung ausgerüstet, um eine Beeinträchtigung in räumlicher Nähe zu der betreffenden elektrischen Maschine angeordneter elektronischer Baugruppen durch Funkenbildung am Kommutator zu verhindern.

Solche Entstöreinrichtungen wurden bisher verbreitet als aus einem Material mit einem spannungsabhängigen Widerstand bestehende ringförmige Entstörscheiben ausgeführt, die mit den Leitersegmenten elektrisch leitend verbunden sind. Die entsprechende Entstörscheibe kann dabei einerseits radial außerhalb der Bürstenlauffläche (vgl. z.B. US 5895990 A, US 5717270 A, GB 2183933 A und US 5796203 A) oder andererseits radial innerhalb der Bürstenlauffläche angeordnet sein (vgl. z.B. US 6285106 B1 und DE 19953231 A1). Darüber hinaus bekannt sind Sonderformen von entstörten Trommelkommutatoren, bei denen die Leitersegmente außen auf zylindrischen Entstörhülsen angeordnet sind (vgl. DE 2055648 und DE 3614869 C2). Die EP 364292 B1 beschreibt einen Trommelkommutator mit einem aus thermoplastischem Material bestehenden Trägerkörper, bei dem radial unterhalb der Anschlußfahnen ein wärmebeständiger Verstärkungsring vorgesehen ist, der eine entstörende Beschichtung aufweisen oder benachbart zu dem ein separater Entstörring angeordnet sein kann; der Verstärkungsring ist dabei ebenso wie der ggf. ergänzend vorgesehene separate Entstörring auf einem Sitz des Trägerkörpers angeordnet, wo er durch von den Leitersegmenten vorspringende Laschen gehalten wird.

Unabhängig von der jeweiligen spezifischen Anordnung der Entstörscheibe sind bei sämtlichen Kommutatoren, deren Entstöreinrichtung eine ringförmige Entstörscheibe umfaßt, die erheblichen Kosten für die Entstöreinrichtung von Nachteil. Denn das Keramikmaterial, aus welchem derartige Entstörscheiben üblicherweise hergestellt werden, ist sehr teuer; und bei der Herstellung von Entstörscheiben, indem diese aus einer Multi-layer-Metall-Keramikplatte herausgeschnitten werden, fallen große Mengen an Abfall an.

Im übrigen kommen von den bekannten, unter Verwendung einer Entstörscheibe entstörten Trommelkommutatoren für viele praktische Anwendungen wegen der Beschränkung des für den jeweiligen Kommutator zur Verfügung stehenden Raumes nur kompakte Trommelkommutatoren mit radial innerhalb der Bürstenlauffläche angeordneten Entstörscheiben in Betracht. Ein weiteres Problem derartiger Trommelkommutatoren mit radial innerhalb der Bürstenlauffläche angeordneten Entstörringen resultiert aus dem unterschiedlichen Wärmedehnverhalten der üblicherweise aus keramischem Material bestehenden Entstörscheibe verglichen mit den übrigen Komponenten betreffender Kommutatoren. Entsprechende Wärmespannungen können nämlich, sofern nicht besondere Vorkehrungen getroffen werden, zum vorzeitigen Ausfall von Kommutatoren infolge gebrochener Entstörscheiben und/oder zerstörter Verbindungen.der Leitersegmente mit den Entstörscheiben führen. Zur Lösung dieses Problems wird in der DE 19953231 A1 vorgeschlagen, die Entstörscheibe mit einem elastischen Klebstoff mit dem Trägerkörper zu verbinden und die Leitersegmente an die Entstörscheibe über dünne Drähte anzuschließen, welche einerseits an der Anschlußfahne des zugeordneten Leitersegments und andererseits an einer zugeordneten Metallisierungszone der Entstörscheibe angelötet werden. Nach der US 6285106 B1, welche einen Trommelkommutator der gattungsgemäßen Art offenbart, sind demgegenüber zur elektrischen Kontaktierung der Leitersegmente mit der Entstörscheibe Blechfedern vorgesehen, welche innerhalb eines ringförmigen Hohlraums angeordnet sind, welcher durch den Trägerkörper, die Leitersegmente und einen ringförmigen Deckel begrenzt wird und in dem auch die Entstörscheibe aufgenommen ist. Die Blechfedern, die eine unterschiedliche radiale Wärmedämmung der Entstörscheibe einerseits und der übrigen Kommutatorbauteile andererseits zulassen, können dabei insbesondere an dem ringförmigen Deckel befestigt sein.

Besonders nachteilig bei den beiden bekannten, vorstehend gewürdigten Trommelkommutatoren mit einer jeweils radial innerhalb der Leitersegmente angeordneten Entstörscheibe ist insbesondere der hohe, der Konkurrenzfähigkeit der entsprechenden Trommelkommutatoren entgegenstehenden Herstellungsaufwand, der insbesondere im Falle des Kommutators nach der EP 364292 B1 zusätzlich zu den hohen Herstellkosten für die Entstörscheibe (s.o.) maßgeblich durch die hohe Anzahl der zusammenzufügenden Bauteile begründet ist. Bei dem Trommelkommutator nach der EP 364292 B1 ist weiterhin nachteilig, daß die allein auf der Anlagekraft der Blechfedern an den Leitersegmenten und an der Entstörscheibe resultierende Kontaktierung nicht dauerhaft zuverlässig ist, beispielsweise indem sie durch Korrosion beeinträchtigt werden kann.

Die DE 4338345 A1 die als nächstliegender Stand der Technik angesehen ist offenbart einen als Trommelkommutator ausgeführten Kommutator der gattungsgemäßen Art mit einer Entstöreinrichtung, die einzelne, in der Trägerkörper eingebettete Entstörelemente umfaßt. Jedes Leitersegment ist dabei über zwei der Lagesicherung des betreffenden Leitersegments dienende, in den Trägerkörper eingebettete Haltestege an jeweils zwei einander benachbarte Entstörelemente angeschlossen. Bei diesem Kommutator entstehen zwar nicht die erheblichen Kosten, wie sie bei den weiter oben erläuterten Kommutatoren mit der Bereitstellung der ringförmigen Entstörscheibe verbunden sind. Allerdings kann von dem Kommutator nach der DE 4338345 A1 aufgrund des weiter oben erläuterten unterschiedlichen Wärmedehnungsverhaltens der unterschiedlichen Materialien nur eine eingeschränkte Lebensdauer der Kontaktierung der Leitersegmente mit den Entstörelementen erwartet werden.

Die der vorliegenden Erfindung zugrundeliegende Aufgabenstellung besteht im Lichte des vorstehend wiedergegebenen Standes der Technik darin, einen langlebigen, zuverlässigen entstörten Kommutator der gattungsgemäßen Art bereitzustellen, der sich mit einem geringen Herstellungsaufwand zu niedrigen Kosten fertigen läßt, wobei besonders bevorzugt möglich sein soll, einen entstörten Kommutator mit im wesentlichen denselben Abmessungen wie einem nicht-entstörten Kommutator gleicher Auslegung herzustellen.

Gelöst wird diese Aufgabenstellung gemäß der vorliegenden Erfindung dadurch, daß bei einem Kommutator der gattungsgemäßen Art die Kontaktzungen radial federnd ausgeführt sind und jeweils in dem Bereich zwischen ihrem Fußpunkt und ihrem Kontaktpunkt gegenüber den benachbarten starren Bauteilen des Kommutators dergestalt getrennt sind, daß sich in diesem Bereich die relative Lage der Kontaktzungen zu den diesen jeweils benachbarten starren Bauteilen des Kommutators wärmedehnungsbedingt verändern kann.

Ein erstes charakteristisches Merkmal für den Kommutator nach der vorliegenden Erfindung ist somit, daß die Entstöreinrichtung nicht eine ringförmige Entstörscheibe umfaßt, sondern vielmehr eine der Anzahl der Leitersegmente entsprechende Anzahl einzelner Entstörelemente; solche einzelnen Entstörelemente, die als Multilayer-Kondensatoren insbesondere eine quaderförmige Form aufweisen können, lassen sich aus einer Multilayer-Metall-Keramikplatte ohne jeglichen Verschnitt und somit besonders kostengünstig herstellen. Ferner ist für den erfindungsgemäßen Kommutator charakteristisch, daß Kontaktzungen, welche integraler Bestandteil der Leitersegmente, d.h. einstückig mit den weiteren Bereichen der Leitersegmente hergestellt sind, der direkten Kontaktierung der Leitersegmente mit den Entstörelementen dienen; gesonderte, zusätzliche Bauteile, wie sie nach dem Stand der Technik insbesondere in Form von Drähten und Blechfedern zur Kontaktierung der Leitersegmente mit einer Entstörscheibe vorgesehen sind, weist der Kommutator nach der vorliegenden Erfindung somit nicht auf. Als "Verbindung" der Kontaktzungen mit den Kontaktpolen der jeweils zwei benachbarten Entstörelemente ist dabei jegliche elektrisch leitende Kontaktierung zu verstehen; insbesondere ist ein gesondertes Verbindungsmaterial wie beispielsweise Lot nicht zwingend vorgesehen. Die direkte und unmittelbare Kontaktierung der einstückig an den Leitersegmenten angeformten Kontaktzungen mit den Entstörelementen, ohne daß dies nachteilige Auswirkungen auf die Lebensdauer des Kommutators hat, wird dabei dadurch ermöglicht, daß sich die Kontaktzungen zum Ausgleich unterschiedlicher Wärmedehnungsverhalten der einzelnen Kommutatorbauteile verformen können. Die Verformbarkeit der Kontaktzungen ergibt sich hinwiederum einerseits aus deren federnder Ausführung, wobei die Kontaktpunkte, an denen die Kontaktzungen mit den Entstörelementen verbunden sind, entfernt von den Fußpunkten der Kontaktzungen, an denen diese im Sinne einer statischen Einspannung in den angrenzenden Bereich der Leitersegmente übergehen, angeordnet sind, und andererseits aus der Trennung der Kontaktzungen gegenüber den benachbarten Bauteilen, so daß letztere den freien Dehnungsausgleich nicht behindern. Namentlich sind bei dem erfindungsgemäßen Kommutator in diesem Sinne die federnden Kontaktzungen an ihren radialen Innenflächen gegenüber dem benachbarten, radial innerhalb der Kontaktzungen angeordneten Bauteil dergestalt getrennt, daß sich ihr Abstand zu dem betreffenden Bauteil wärmedehnungsbedingt verändern kann. Die genannte Trennung der federnden Kontaktzungen gegenüber den jeweils benachbarten übrigen Bauteilen des Kommutators kann dabei insbesondere eine freie Anordnung der Kontaktzungen innerhalb entsprechender Aussparungen des Trägerkörpers umfassen, so daß die Kontaktzungen abgesehen von ihrem Fußpunkt und ihrem Kontaktpunkt von Luft umgeben sind; es kommt allerdings auch eine vollständige oder teilweise Einbettung der federnden Kontaktzungen in ein elastisch nachgiebiges Material in Betracht. Durch jene Trennung der federnden Kontaktzungen zu dem radial innen benachbarten starren Bauteil des Kommutators können die Kontaktzungen in Abhängigkeit von der jeweiligen Wärmedehnung der einzelnen Bauteile einen mehr oder weniger großen radialen Abstand zu den radial innen an sie angrenzenden starren Bauteilen, namentlich dem aus Preßmasse gebildeten Trägerkörper einhalten. Durch die Verformbarkeit der Kontaktzungen werden im übrigen die Spannungen, welche im Bereich der festen Verbindung der Kontaktzungen mit den Entstörelementen wirken, so weit reduziert, daß Schäden an dieser Verbindung ausgeschlossen werden. Die Kontaktzungen können somit insbesondere mittels einfacher Lötverbindungen oder auch elektrisch leitender Klebeverbindungen im Bereich der Kontaktpunkte dauerhaft mit den Entstörelementen verbunden werden.

Ersichtlich lassen sich somit in Anwendung der vorliegenden Erfindung aufgrund der Kombinationen der für erfindungsgemäße Kommutatoren charakteristischen Merkmale mit minimalem Fertigungsaufwand äußerst preisgünstige, langlebige und kompakte entstörte Kommutatoren herstellen.

Gemäß einer ersten bevorzugten Weiterbildung des erfindungsgemäßen Kommutators sind die Entstörelemente als quaderförmige Multilayer-Kondensatoren ausgeführt und entlang der Kanten eines gleichseitigen Vielecks um die Kommutatorachse herum angeordnet, und zwar zweckmäßigerweise jeweils auf Lücke zwischen zwei einander benachbarten Leitersegmenten. Dies begünstigt insbesondere eine verfahrensmäßig einfache und somit kostengünstige Herstellung des erfindungsgemäßen Kommutators.

Gemäß einer anderen bevorzugten Weiterbildung ist bei dem erfindungsgemäßen Kommutator die in Umfangsrichtung ermittelte Breite der federnden Kontaktzungen geringer als die Breite der Leitersegmente. Auch ist bevorzugt die Länge der Kontaktzungen wesentlich größer als deren Breite und diese wiederum größer als die Dicke der Kontaktzungen. Dies ist einerseits von Vorteil im Hinblick auf die federnde Nachgiebigkeit der Kontaktzungen; des weiteren ergeben sich auf diese Weise günstige Einbauverhältnisse für die Entstörelemente dergestalt, daß die Kontaktzungen jeweils zwischen die Kontaktpole zweier einander benachbarter Entstörelemente ragen und mit den zugeordneten Kontaktpolen in dem Sinne einen zusammenhängenden Kontaktbereich bilden, daß sie jeweils den Zwischenraum zwischen den Kontaktpolen der beiden benachbarten Entstörelemente überbrücken.

Während sich das der vorliegenden Erfindung zugrundeliegende Konzept mit Vorteil bei Kommutatoren verschiedener Bauweisen (Trommelkommutatoren, Plankommutatoren) umsetzen läßt, sind im Falle der Ausführung des Kommutators als Trommelkommutator mit einer zylindrischen Bürstenlauffläche die durch die vorliegende Erfindung erzielbaren Vorzüge besonders ausgeprägt. Namentlich bei solchen erfindungsgemäßen Kommutatoren, die als Trommelkommutator ausgeführt sind, zweigen gemäß einer besonders bevorzugten Weiterbildung der Erfindung die Kontaktzungen von der inneren Radialfläche der Leitersegmente ab. Hierdurch ergibt sich, nachdem sich die Bürstenlauffläche in axialer Richtung über die Entstöreinrichtung hinaus erstreckt, eine besonders kompakte Bauweise.

Für die elektrisch leitende Verbindung der Kontaktzungen mit den Entstörelementen im Bereich von deren Kontaktpolen bestehen verschiedene Möglichkeiten. Besonders bevorzugt werden die Kontaktzungen an die Kontaktpole der zugeordneten Entstörelemente angelötet. Aber auch eine elektrisch leitende Klebeverbindung läßt sich mit Vorteil einsetzen. Unter besonderen Voraussetzungen ist sogar denkbar, daß auf ein gesondertes Verbindungsmaterial wie Lot oder Klebstoff verzichtet wird und eine elektrisch leitende Kontaktierung der Kontaktzungen mit den Entstörelementen allein aufgrund einer vorspannungsbehafteten Anlage der Kontaktzungen an den Kontaktpolen der Entstörelemente erfolgt.

Im Hinblick auf die Ausführung der Anschlußelemente zeichnet sich eine wiederum andere bevorzugte Weiterbildung der Erfindung dadurch aus, daß die Anschlußelemente als Anschlußfahnen ausgeführt sind, die im Falle der Ausführung des Kommutators als Trommelkommutator im Bereich der der Entstöreinrichtung gegenüberliegenden Stirnseite des Kommutators angeordnet sind. In diesem Falle ist das Risiko einer Beschädigung der Verbindungen der Kontaktzungen mit den Entstörelementen während des Anschweißens der Rotorwicklung an die Anschlußfahnen minimal.

Zur dauerhaften Sicherung ihrer Lage sind die Entstörelemente besonders bevorzugt jeweils in eine axial in den Trägerkörper eingesenkte Aufnahme des Trägerkörpers eingesetzt. Die Begrenzungswände einer derartigen Aufnahme stehen dabei zur Abstützung des betreffenden Entstörelelemnts in radialer Richtung, in Umfangsrichtung sowie in axialer Richtung den radialen Innen- und Außenflächen, den beiden Seitenflächen und einer Stirnfläche des Entstörelements gegenüber. Die Aufnahmen werden dabei besonders bevorzugt radial innen und in Umfangsrichtung jeweils durch einen Rippenring und radial außen durch Preßmassevorsprünge des Trägerkörpers begrenzt. Die Seitenflächen der Entstörelemente sind dabei allerdings von den Rippen des Rippenringes nur teilweise abgedeckt, um ausreichend Raum für den elektrisch leitenden Anschluß der Kontaktzungen an die Entstörelemente bereitzustellen.

Der vorstehend erläuterte Rippenring kann insbesondere in eine Rippenhülse verlängert sein, die an der der Entstöreinrichtung zugeordneten Stirnseite des Kommutators wesentlich über die Entstörelemente hinausragt, wobei die radialen Abmessungen der Rippenhülse gleich oder kleiner sind als die radialen Abmessungen des Rippenringes. Die entsprechende Rippenhülse bildet den Träger für ein der Erfassung der Ankerwinkellage des Rotors dienendes Ringelement aus magnetisiertem Material, das insbesondere aus Ferrit, Seltener Erde oder Semikobalt bestehen kann. Statt auf eine Rippenhülse kann jenes Ringelement aus magnetisiertem Material gemäß einer anderen bevorzugten Weiterbildung der Erfindung auch auf einen axial vom Trägerkörper abstehenden Zentriervorsprung aufgesetzt sein; dies ermöglicht die Fixierung des Ringelement an dem Trägerkörper in jeder beliebigen Drehwinkellage.

Im folgenden wird die vorliegende Erfindung anhand vierer in der Zeichnung veranschaulichter bevorzugter Ausführungsbeispiele näher erläutert. Dabei zeigt
- Fig. 1: einen Axialschnitt durch eine erste Ausführungsform eines nach der vorliegenden Erfindung ausgeführten Trommelkommutators,
- Fig. 1a: einen vergrößerten Ausschnitt der Fig. 1,
- Fig. 2: einen Querschnitt durch den Trommelkommutator nach Fig. 1 entlang der Linie II-II,
- Fig. 2a: einen vergrößerten Ausschnitt der Fig. 2,
- Fig. 3: den vergrößerten Ausschnitt eines Axialschnitts durch den Trommelkommutator nach den Fig. 1 und 2 entlang der Linie III-III,
- Fig. 4: einen Axialschnitt durch eine zweite, gegenüber der Ausführungsform nach den Fig. 1 bis 3 abgewandelte Ausführungsform eines Trommelkommutators nach der vorliegenden Erfindung,
- Fig. 5: einen Querschnitt durch den Trommelkommutator nach Fig. 4 entlang der Linie V-V,
- Fig. 6: einen Querschnitt durch einen nach der vorliegenden Erfindung ausgeführten Plankommutator,
- Fig. 7: einen Axialschnitt durch den Plankommutator nach Fig. 6 entlang der Linie VII-VII in Fig. 6,
- Fig. 8: einen Axialschnitt durch den Plankommutator nach den Fig. 6 und 7 entlang der Linie VIII-VIII in Fig. 6 und
- Fig. 9: einen Axialschnitt durch eine Abwandlung des Trommelkommutators nach den Fig. 4 und 5.

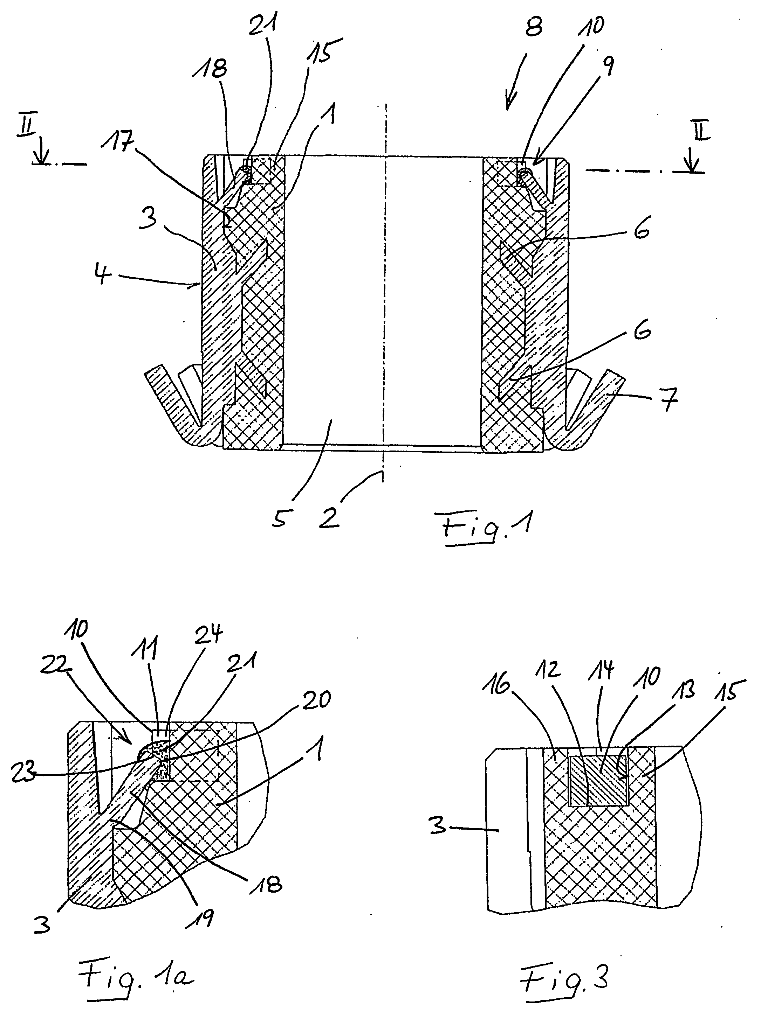

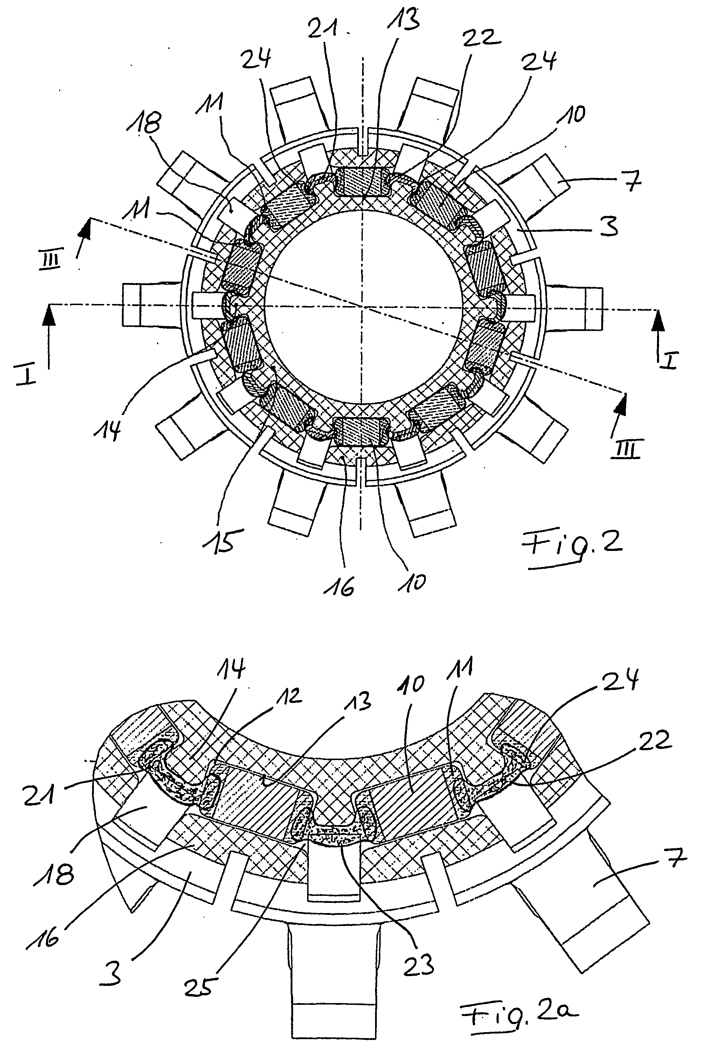

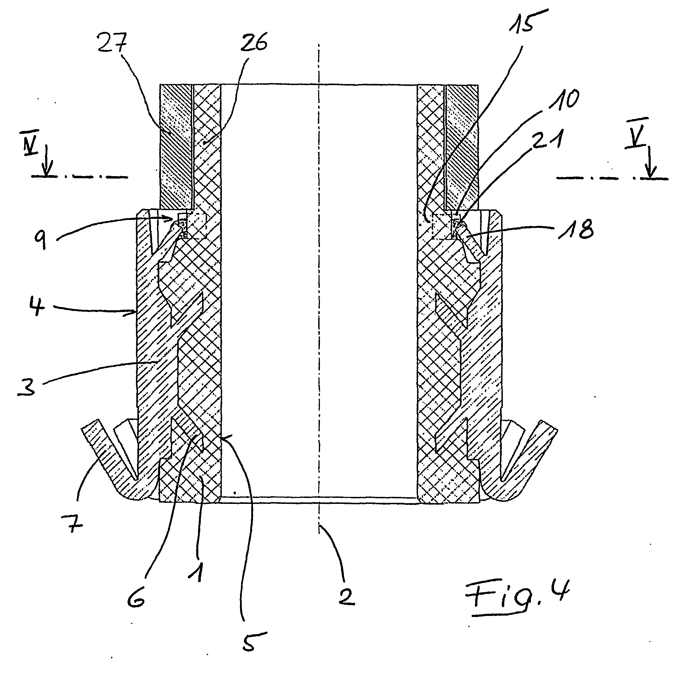

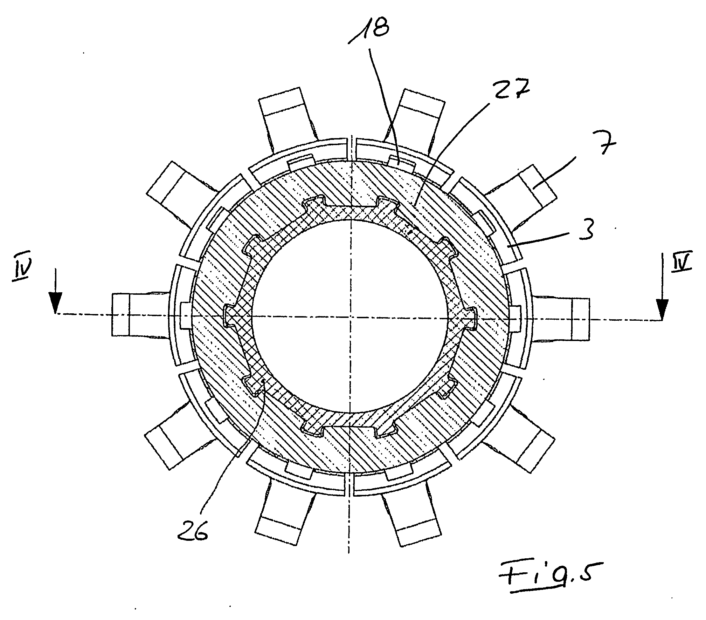

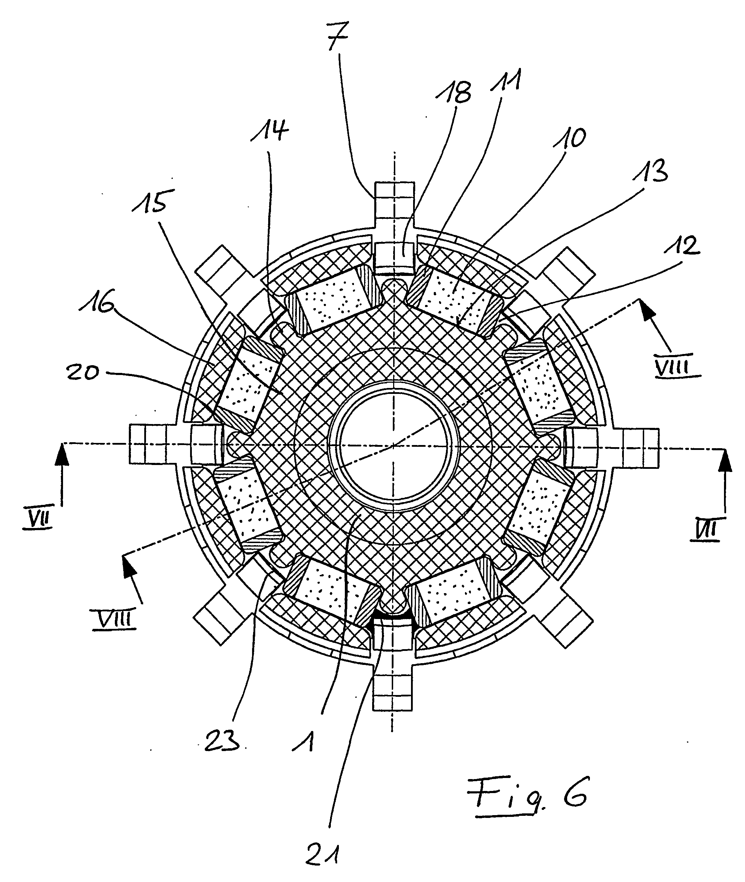

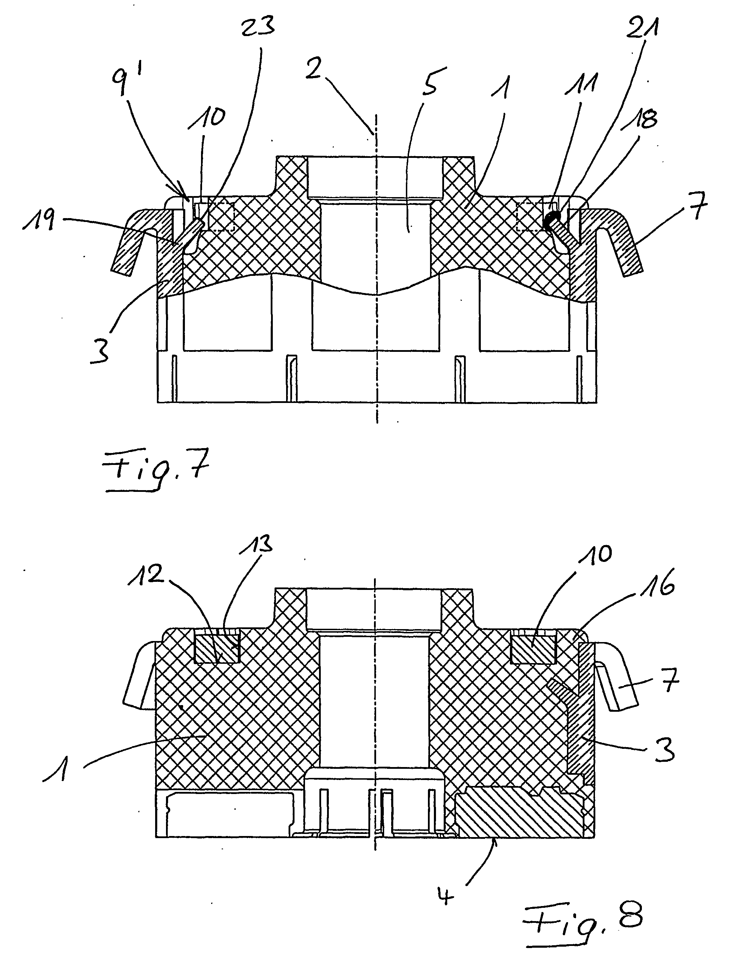

Der in den Figuren 1 bis 3 dargestellte Trommelkommutator umfaßt als wesentliche Bauteile einen aus isolierender Preßmasse hergestellten Trägerkörper 1 und zehn gleichmäßig um die Kommutatorachse 2 herum angeordnete Leitersegmente 3, deren zylindrische Umfangsflächen die Bürstenlauffläche 4 definieren. Der Trägerkörper 1 weist eine zur Achse 2 konzentrische Bohrung 5 auf, welche der Anordnung des Kommutators auf einer Rotorwelle dient.

Ankerteile 6 der Leitersegmente 3 sind in die Preßmasse des Trägerkörpers 1 eingebettet, um die Leitersegmente auch bei hohen Drehzahlen trotz der dann herrschenden Fliehkräfte sicher zu verankern. Endseitig sind an den Leitersegmenten 3 Anschlußfahnen 7 vorgesehen, die, in als solches bekannter Weise, dem Anschluß von Wicklungsdrähten an den Kommutator dienen.

In dem vorstehend dargelegten Umfang entspricht der Kommutator nach den Fig. 1 bis 3 dem hinlänglich bekannten Stand der Technik, so daß es zu seinem Verständnis weiterer Erläuterungen nicht bedarf.

Im Bereich der den Anschlußfahnen 7 gegenüberliegenden Stirnseite 8 weist der Kommutator eine Entstöreinrichtung 9 auf. Diese umfaßt zehn einzelne, gleichförmig um die Kommutatorachse 2 herum angeordnete, quaderförmige Entstörelemente 10 aus keramischem Material. Die Entstörelemente 10 sind dabei auf Lücke zu den Leitersegmenten 3 angeordnet. Sie weisen jeweils eine Kondensatorfunktion auf und verfügen jeweils an zwei einander gegenüberliegenden Seitenflächen über metallisierte Schichten 11. Jedes Entstörelement 10 ist in einer taschenförmigen Aufnahme 12 des Trägerkörpers 1 aufgenommen. Radial innen und in Umfangsrichtung werden jene Aufnahmen 12 durch eine Umfangsfläche 13 bzw. zwei Rippen 14 eines Rippenringes 15 begrenzt, der Teil des Trägerkörpers 1 ist; radial außen begrenzt jeweils ein Pressmassevorsprung 16 des Trägerkörpers 1 die Aufnahmen 12 für die Entstörelemente 10. Zu ihrer Lagesicherung sind die Entstörelemente 10 in den zugeordneten Aufnahmen 12 verklebt.

Nahe den der Stirnseite 8 des Kommutators zugeordneten Enden der Leitersegmente 3 sind an deren radialer Innenseite 17 federnde Kontaktzungen 18 angeformt. Ausgehend von ihrem jeweiligen Fußpunkt 19 erstrecken sich die Kontaktzungen 18 in Richtung auf die benachbarte Stirnseite 8 des Kommutators hin schräg nach innen. Die Kontaktzungen 18 sind nicht in die Preßmasse des Trägerkörpers 1 eingebettet, so daß eine Verformung möglich ist.

Die federnden Kontaktzungen 18 der Leitersegmente 3 ragen mit ihren freien Enden 20 jeweils zwischen zwei einander benachbarte Entstörelemente 10. Mittels einer Lötverbindung 21, welche im Sinne eines zusammenhängenden Kontaktbereichs 22 sowohl den am freien Ende der betreffenden Kontaktzunge 18 angeordneten Kontaktpunkt 23 des Leitersegments 3 als auch die benachbarten, jeweils durch die metallisierten Schichten 11 gebildeten Kontaktpole 24 der angrenzenden Entstörelemente 10 erfaßt, ist jede Kontaktzunge dauerhaft elektrisch leitend mit den beiden benachbarten Entstörelementen verbunden. Um für die Lötverbindungen 21 ausreichend Raum zu schaffen, besteht zwischen den Rippen 14 des Rippenringes 15 und den Preßmassevorsprüngen 16 des Trägerkörpers 1 jeweils ein Spalt 25.

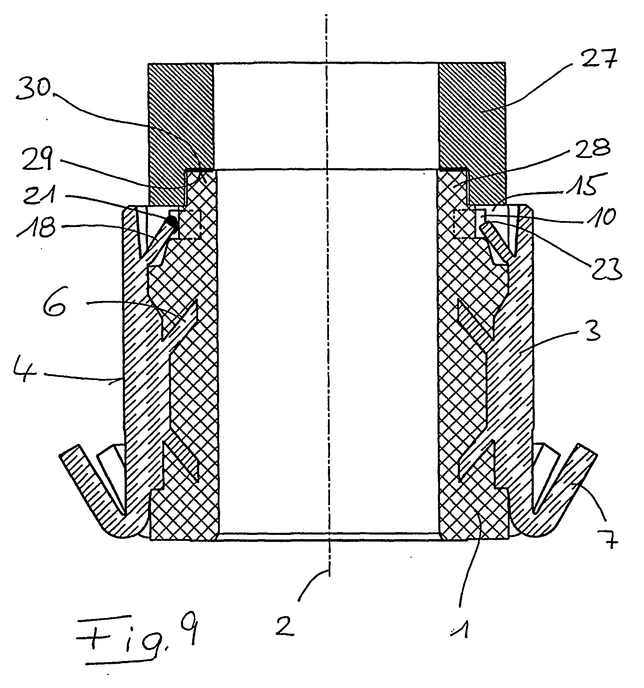

Die in den Fig. 4 und 5 veranschaulichte Ausführungsform des erfindungsgemäßen Kommutators entspricht hinsichtlich ihrer wesentlichen Gestaltungsmerkmale der Ausführungsform nach den Figuren 1 bis 3. Zur Vermeidung von Wiederholungen wird auf die vorstehenden Erläuterungen verwiesen. Als maßgeblicher Unterschied erweist sich lediglich, daß der Rippenring 15 in eine Rippenhülse 26 verlängert ist, die an der der Entstöreinrichtung 9 zugeordneten Stirnseite 8 des Kommutators wesentlich über die Entstörelemente 10 hinausragt. Auf die Rippenhülse 26 ein Ringelement 27 aus magnetisiertem Material (z.B. Ferrit, Seltener Erde oder Semikobalt) aufgesetzt und mit der Rippenhülse verklebt.

Bei dem nach der Erfindung ausgeführten Plankommutator, wie er in den Fig. 6 bis 8 veranschaulicht ist, ist die acht Entstörelemente 10 umfassende Entstöreinrichtung 9' im Bereich der der Bürstenlaufflächen 4 gegenüberliegenden Stirnseite des Kommutators angeordnet. Für die Entstöreinrichtung selbst gelten die vorstehenden Ausführungen zu der Ausführungsform nach den Fig. 1 bis 3 in entsprechender Weise, so daß zur Vermeidung von Wiederholungen auf die Beschreibung jener Zeichnungen verwiesen wird. Wie im Falle des vorstehend beschriebenen Trommelkommutators sind die Kontaktpunkte 23 der Kontaktzungen 18 mit den beiden jeweils benachbarten Entstörelementen 10 über Lötverbindungen 21 verbunden, wie dies (nur) für eine der Kontaktzungen zeichnerisch dargestellt ist. Die erfindungsgemäße Ausführung der Entstöreinrichtung läßt sich im übrigen bei Plankommutatoren unabhängig davon realisieren, ob die Bürstenlauffläche durch die Leitersegmente selbst oder aber durch Kohlenstoffsegmente definiert wird.

Der Trommelkommutator gemäß Fig. 9 entspricht hinsichtlich seiner wesentlichen konstruktiven Merkmale dem in den Figuren 1 bis 3 dargestellten Trommelkommutator, so daß zur Vermeidung von Wiederholungen auf die entsprechenden Ausführungen verwiesen werden kann. Wiederum weist der Trommelkommutator, wie dies für den Kommutator nach den Figuren 4 und 5 gilt, stirnseitig ein Ringelement 27 aus magnetisiertem Material auf. Dieses ist indessen nicht auf eine Rippenhülse aufgesetzt; vielmehr ist bei dem Trommelkommutator gemäß Fig. 9 der Trägerkörper 1 zu einem axial vorspringenden Zentriervorsprung 28 verlängert. Auf diesen ist das Ringelement 27 aus magnetisiertem Material aufgesetzt. Mittels einer im Bereich der Stirnfläche 29 des Zentriebvorsprungs 28 angeordneten Verklebung 30 ist das Ringelement 27 fest mit dem Trägerkörper 1 des Kommutators verbunden.

## Patentansprüche

1. Kommutator für eine elektrische Maschine, umfassend einen aus isolierender Preßmasse gefertigten Trägerkörper (1), eine Mehrzahl von an diesem gleichmäßig um die Kommutatorachse (2) herum angeordneten metallischen Leitersegmenten (3) mit daran angeordneten Anschlußelementen für eine Rotorwicklung und eine Entstöreinrichtung (9, 9'), mit welcher die Leitersegmente (3) elektrisch leitend verbunden sind und die eine der Anzahl der Leitersegmente (3) entsprechende Anzahl einzelner Enstörelemente (10) umfaßt, wobei die Leitersegmente (3) Kontaktzungen (18) aufweisen, die jeweils entfernt von ihren Fußpunkten (19) an zugeordneten Kontaktpunkten (23) mit den angrenzenden Kontaktpolen (24) zweier benachbarter Entstörelemente (10) verbunden sind,
**dadurch gekennzeichnet,**
**daß** die Kontaktzungen (18) radial federnd ausgeführt sind und jeweils in dem Bereich zwischen ihrem Fußpunkt (19) und ihrem Kontaktpunkt (23) gegenüber den benachbarten starren Bauteilen des Kommutators dergestalt getrennt sind, daß sich in diesem Bereich die relative Lage der Kontaktzungen (18) zu den diesen jeweils benachbarten starren Bauteilen des Kommutators wärmedehnungsbedingt verändern kann.

2. Kommutator nach Anspruch 1,
**dadurch gekennzeichnet,**
**daß** die Entstörelemente (10) als quaderförmige Multilayer-Kondensatoren ausgeführt sind.

3. Kommutator nach Anspruch 1 oder Anspruch 2,
**dadurch gekennzeichnet,**
**daß** die Kontaktzungen (18) jeweils zwischen die Kontaktpole (24) zweier einander benachbarter Entstörelemente (10) ragen, wobei die Kontaktzungen (18) jeweils den Zwischenraum zwischen den Kontaktpolen (24) der beiden benachbarten Entstörelemente (10) überbrücken.

4. Kommutator einem der Ansprüche 1 bis 3,
**dadurch gekennzeichnet,**
**daß** die Entstörelemente (10) gleich distanziert entlang den Kanten eines gleichseitigen Vielecks um die Kommutatorachse (2) herum angeordnet sind.

5. Kommutator nach einem der Ansprüche 1 bis 4,
**dadurch gekennzeichnet,**
**daß** die in Umfangsrichtung ermittelte Breite der federnden Kontaktzungen (18) geringer ist als die Breite der Leitersegmente (3).

6. Kommutator nach einem der Ansprüche 1 bis 5,
**dadurch gekennzeichnet,**
**daß** die Länge der Kontaktzungen (18) wesentlich größer ist als deren Breite und diese wiederum wesentlich größer als die Dicke der Kontaktzungen (18).

7. Kommutator nach einem der Ansprüche 1 bis 6
**dadurch gekennzeichnet,**
**daß** er als Trommelkommutator mit einer zylindrischen Bürstenlauffläche (4) ausgeführt ist.

8. Kommutator nach Anspruch 7
**dadurch gekennzeichnet,**
**daß** die Kontaktzungen (18) von der inneren Radialfläche (17) der Leitersegmente (3) abzweigen.

9. Kommutator nach Anspruch 7 oder Anspruch 8
**dadurch gekennzeichnet,**
**daß** sich die Bürstenlauffläche (4) in axialer Richtung über die Entstöreinrichtung (9) hinaus erstreckt, wobei die radiale Dicke der Leitersegmente (3) unter der Bürstenlauffläche (4) auch im Bereich der Entstöreinrichtung (9) größer ist als 0,5 mm.

10. Kommutator nach einem der Ansprüche 7 bis 9,
**dadurch gekennzeichnet,**
**daß** die Entstöreinrichtung (9) an der den Anschlußelementen für die Rotorwicklung gegenüberliegenden Stirnseite des Kommutators angeordnet ist.

11. Kommutator nach einem der Ansprüche 1 bis 5,
**dadurch gekennzeichnet,**
**daß** er als Plankommutator ausgeführt ist, wobei die Entstöreinrichtung (9') an der den Anschlußelementen für die Rotorwicklung zugeordneten Stirnseite des Kommutators angeordnet ist.

12. Kommutator nach einem der Ansprüche 1 bis 11,
**dadurch gekennzeichnet,**
**daß** die Kontaktzungen (18) an die Kontaktpole (24) der zugeordneten Entstörelemente (10) angelötet oder elektrisch leitend angeklebt sind.

13. Kommutator nach einem der Ansprüche 1 bis 12,
**dadurch gekennzeichnet,**
**daß** die Kontaktzungen (18) zur Anlage an den Kontaktpolen (24) der zugeordneten Entstörelemente (10) elastisch vorgespannt sind.

14. Kommutator nach einem der Ansprüche 1 bis 13,
**dadurch gekennzeichnet,**
**daß** die Entstörelemente (10) jeweils in eine Aufnahme (12) des Trägerkörpers (1) eingesetzt sind, deren Begrenzungswände jeweils den radialen Innen- und Außenflächen, den beiden Seitenflächen und einer Stirnfläche des betreffenden Entstörelements gegenüberstehen.

15. Kommutator nach Anspruch 14,
**dadurch gekennzeichnet,**
**daß** die Aufnahmen (12) radial innen und in Umfangsrichtung jeweils durch einen Rippenring (15) und radial außen durch Preßmassevorsprünge (16) des Trägerkörpers (1) begrenzt werden.

16. Kommutator nach Anspruch 15,
**dadurch gekennzeichnet,**
**daß** der Rippenring (15) in eine Rippenhülse (26) verlängert ist, die an der der Entstöreinrichtung (9) zugeordneten Stirnseite (8) des Kommutators wesentlich über die Entstörelemente (10) hinausragt, wobei die radialen Abmessungen der Rippenhülse (26) gleich oder kleiner sind als die radialen Abmessungen des Rippenringes (15).

17. Kommutator nach Anspruch 16,
**dadurch gekennzeichnet,**
**daß** auf die Rippenhülse (26) ein Ringelement (27) aus magnetisiertem Material aufgesetzt ist.

18. Kommutator nach Anspruch 17,
**dadurch gekennzeichnet,**
**daß** das Ringelement (27) aus Ferrit, Seltener Erde oder Semikobalt besteht.

19. Kommutator nach Anspruch 17 oder Anspruch 18,
**dadurch gekennzeichnet,**
**daß** das Ringelement (27) mit der Rippenhülse (26) verklebt ist.

20. Kommutator nach einem der Ansprüche 1 bis 15,
**dadurch gekennzeichnet,**
**daß** der Trägerkörper (1) an seiner der Entstöreinrichtung (9) zugeordneten Stirnseite (8) in einen Zentriervorsprung (28) verlängert ist, auf den ein Ringelement (27) aus magnetisiertem Material aufgesetzt ist.

## Claims

1. Commutator for an electric machine, incorporating a carrier (1) made from an isolating pressed mass, a multitude of metallic conductor segments (3), evenly distributed around the commutator axis (2), with connecting elements located on the same, for a rotor winding and an anti-interference means (9, 9'), with which the conductor segments (3) are connected in an electrically conductive way, and which incorporates a multitude of individual anti-interference elements (10) equalling the number of conductor segments (3), whereby the conductor segments (3) incorporate contact tabs (18) which are each connected with adjacent contact poles (24) of two neighbouring anti-interference elements (10) at associated contact points (23) spaced apart from their foot points (19), **characterised in that** the contact tabs (18) are radially sprung and are each separated in the area between their foot point (19) and their contact point (23) from the neighbouring rigid components of the commutator in such a way that the relative position of the contact tabs (18) in this area can change with heat expansion in relation to the relevant neighbouring rigid components of the commutator.

2. Commutator according to Claim 1, **characterised in that** the anti-interference elements (10) take the form of cuboid-shaped multi layer condensers.

3. Commutator according to Claim 1 or Claim 2, **characterised in that** the contact tabs (18) each project between the contact poles (24) of two neighbouring anti-interference elements (10), whereby the contact tabs (18) each bridge the gap between the contact poles (24) of the two neighbouring anti-interference elements (10).

4. Commutator according to one of the Claims 1 to 3, **characterised in that** the anti-interference elements (10) are evenly spaced apart along the edges of an even-sided polygon around the commutator axis (2).

5. Commutator according to one of the Claims 1 to 4, **characterised in that** the width of the sprung contact tabs (18) calculated in a circumferential direction is less than the width of the conductor segments (3).

6. Commutator according to one of the Claims 1 to 5, **characterised in that** the length of the contact tabs (18) is substantially greater than their width, and **in that** this is once more greater than the thickness of the contact tabs (18).

7. Commutator according to one of the Claims 1 to 6, **characterised in that** the same takes the form of a drum commutator with a cylindrical brush surface (4).

8. Commutator according to Claim 7, **characterised in that** the contact tabs (18) branch away from the inner radial surface (17) of the conductor segments (3).

9. Commutator according to Claim 7 or Claim 8, **characterised in that** the brush surfaces (4) extend in an axial direction across the anti-interference means (9), whereby the radial thickness of the conductor segments (3) below the brush surface (4) is greater than 0.5 mm even in the area of the anti-interference means (9).

10. Commutator according to one of the Claims 7 to 9, **characterised in that** the anti-interference means (9) is located on the facing side of the commutator opposite the connecting element for the rotor winding.

11. Commutator according to one of the Claims 1 to 5, **characterised in that** the same takes the form of a plan commutator, whereby the anti-interference means (9') is located on the facing side of the commutator that is associated with the connecting elements for the rotor windings.

12. Commutator according to one of the Claims 1 to 11, **characterised in that** the contact tabs (18) are soldered or glued to the contact poles (24) of the associated anti-interference elements (10) in an electrically conductive way.

13. Commutator according to one of the Claims 1 to 12, **characterised in that** the contact tabs (18) are elastically pre-tensioned for abutment against the contact poles (24) of the associated anti-interference elements (10).

14. Commutator according to one of the Claims 1 to 13, **characterised in that** the anti-interference elements (10) are each inserted into a take-up (12) of the carrier (1), the defining walls of which are positioned opposite the radial inner and outer surfaces, the two side surfaces, and one facing surface of the relevant anti-interference element.

15. Commutator according to Claim 14, **characterised in that** the take-ups (12) are defined radially inside and in a circumferential direction by means of a ribbed ring (15), and radially outside by means of pressed mass projections (16) of the carrier (1).

16. Commutator according to Claim 15, **characterised in that** the ribbed ring (15) extends into a ribbed sleeve (26), which substantially projects over the anti-interference elements (10) located on the facing side (8) associated with the anti-interference means (9) of the commutator, whereby the radial dimensions of the ribbed sleeve (26) are the same or smaller than the radial dimensions of the ribbed ring (15).

17. Commutator according to Claim 16, **characterised in that** an annular element (27) made of a magnetised material is inserted over the ribbed sleeve (26).

18. Commutator according to Claim 17, **characterised in that** the annular element (27) consists of ferrite, rare earth, or semi-cobalt.

19. Commutator according to Claim 17 or Claim 18, **characterised in that** the annular element (27) is glued to the ribbed sleeve (26).

20. Commutator according to one of the Claims 1 to 15, **characterised in that** the carrier (1) extends into a centering projection (28) on its facing side (8) associated with the anti-interference means (9), onto which an annular element (27) made of a magnetised material has been inserted.

## Revendications

1. Collecteur pour machine électrique, comprenant un corps support (1), réalisé à partir d'une matière isolante moulée par compression, une pluralité de segments conducteurs (3) métalliques, disposés régulièrement autour de l'axe de commutateur (2) et comportant des éléments de connexion pour un enroulement de rotor, et un dispositif d'antiparasitage (9, 9') auquel les segments conducteurs (3) sont connectés de façon électriquement conductrice et qui comporte des éléments d'antiparasitage (10) individuels dont le nombre correspond à celui des segments conducteurs (3), les segments conducteurs (3) présentant des lames de contact (18) qui, à des endroits éloignés de leurs bases (19), sont reliées aux pôles de contact (24) adjacents de deux éléments d'antiparasitage (10) voisins, en des points de contact (23) associés, **caractérisé en ce que** les lames de contact (18) sont réalisées avec une élasticité radiale et sont séparées chaque fois dans la région située entre leur base (19) et leur point de contact (23) par rapport aux éléments rigides voisins du collecteur, de manière telle que dans cette région, la position des lames de contact (18) par rapport à ces éléments rigides voisins du collecteur puisse se modifier sous l'effet de la dilatation thermique.

2. Collecteur selon la revendication 1, **caractérisé en ce que** les éléments d'antiparasitage (10) sont réalisés sous forme de condensateurs multicouches parallélépipédiques.

3. Collecteur selon la revendication 1 ou 2, **caractérisé en ce que** les lames de contact (18) avancent chacune entre les pôles de contact (24) de deux éléments d'antiparasitage (10) voisins, les lames de contact (18) couvrant chaque fois l'espace entre les pôles de contact (24) des deux éléments d'antiparasitage (10) voisins.

4. Collecteur selon une des revendications 1 à 3, **caractérisé en ce que** les éléments d'antiparasitage (10) sont disposés à égales distances, le long des bords d'un polygone équilatéral, autour de l'axe de collecteur (2).

5. Collecteur selon une des revendications 1 à 4, **caractérisé en ce que** la largeur des lames de contact (18) élastiques, mesurée dans la direction périphérique, est inférieure à la largeur des segments conducteurs (3).

6. Collecteur selon une des revendications 1 à 5, **caractérisé en ce que** la longueur des lames de contact (18) est nettement supérieure à leur largeur qui est à son tour nettement supérieure à l'épaisseur des lames de contact (18).

7. Collecteur selon une des revendications 1 à 6, **caractérisé en ce qu'**il est réalisé sous forme de collecteur cylindrique, comportant une surface de contact (4) cylindrique des balais.

8. Collecteur selon la revendication 7, **caractérisé en ce que** les lames de contact (18) partent de la surface radiale intérieure (17) des segments conducteurs (3).

9. Collecteur selon la revendication 7 ou 8, **caractérisé en ce que** la surface de contact (4) des balais dépasse le dispositif d'antiparasitage (9) dans la direction axiale, l'épaisseur radiale des segments conducteurs (3), sous la surface de contact (4) des balais, étant supérieure à 0,5 mm, y compris dans la région du dispositif d'antiparasitage (9).

10. Collecteur selon une des revendications 7 à 9, **caractérisé en ce que** le dispositif d'antiparasitage (9) est placé sur la face frontale du collecteur qui est opposée aux éléments de connexion pour l'enroulement de rotor.

11. Collecteur selon une des revendications 1 à 5, **caractérisé en ce qu'**il est réalisé sous forme de collecteur plat, le dispositif d'antiparasitage (9') étant placé sur la face frontale du collecteur qui est associée aux éléments de connexion pour l'enroulement de rotor.

12. Collecteur selon une des revendications 1 à 11, **caractérisé en ce que** les lames de contact (18) sont soudées ou collées de façon électroconductrice aux pôles de contact (24) des éléments d'antiparasitage (10) associés.

13. Collecteur selon une des revendications 1 à 12, **caractérisé en ce que** les lames de contact (18) sont mises sous précontrainte élastique en vue de leur application contre les pôles de contact (24) des éléments d'antiparasitage (10) associés.

14. Collecteur selon une des revendications 1 à 13, **caractérisé en ce que** les éléments d'antiparasitage (10) sont insérés chacun dans un logement (12) du corps support (1), les parois de délimitation de ces logements étant en vis-à-vis respectivement des parois radiales intérieure et extérieure, des deux faces latérales et d'une face frontale de l'élément d'antiparasitage concerné.

15. Collecteur selon la revendication 14, **caractérisé en ce que** les logements (12) sont délimités chacun radialement à l'intérieur et dans la direction périphérique par une bague à nervures (15) et radialement à l'extérieur par des saillies de matière moulée par compression (16) du corps support (1).

16. Collecteur selon la revendication 15, **caractérisé en ce que** la bague à nervures (15) se prolonge par un manchon à nervures (26) qui, sur la face frontale (8) du collecteur associée au dispositif d'antiparasitage (9), dépasse sensiblement par rapport aux éléments d'antiparasitage (10), les dimensions radiales du manchon à nervures (26) étant égales ou inférieures aux dimensions radiales de la bague à nervures (15).

17. Collecteur selon la revendication 16, **caractérisé en ce qu'**un élément annulaire (27) en un matériau aimanté est rapporté sur le manchon à nervures (26).

18. Collecteur selon la revendication 17, **caractérisé en ce que** l'élément annulaire (27) est réalisé en ferrite, en terres rares ou en semi-cobalt.

19. Collecteur selon la revendication 17 ou la revendication 18, **caractérisé en ce que** l'élément annulaire (27) est collé au manchon à nervures (26).

20. Collecteur selon une des revendications 1 à 15, **caractérisé en ce que** le corps support (1), sur sa face frontale (8) associée au dispositif d'antiparasitage (9), se prolonge par une saillie de centrage (28) sur laquelle est rapporté un élément annulaire (27) en un matériau aimanté.
